(19) Europäisches Patentamt
European Patent Office
Office européen des brevets

(11) **EP 4 375 659 B1**

(12) **EUROPEAN PATENT SPECIFICATION**

(45) Date of publication and mention
of the grant of the patent:
**26.03.2025 Bulletin 2025/13**

(21) Application number: **23212703.5**

(22) Date of filing: **28.11.2023**

(51) International Patent Classification (IPC):
**G01N 30/88** (2006.01)

(52) Cooperative Patent Classification (CPC):
**G01N 30/88;** G01N 2030/8831; Y02A 50/30

(54) **A METHOD FOR THE QUANTITATIVE DETERMINATION OF HUMAN SERUM ALBUMIN MONOMER IN VIRUS-CONTAINING PHARMACEUTICAL COMPOSITIONS**

VERFAHREN ZUR QUANTITATIVEN BESTIMMUNG VON MENSCHLICHEM SERUMALBUMINMONOMER IN VIRUSHALTIGEN PHARMAZEUTISCHEN ZUSAMMENSETZUNGEN

PROCÉDÉ POUR LA DÉTERMINATION QUANTITATIVE DE MONOMÈRES D'ALBUMINE SÉRIQUE HUMAINE DANS DES COMPOSITIONS PHARMACEUTIQUES CONTENANT DES VIRUS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.11.2022 EP 22210027**

(43) Date of publication of application:
**29.05.2024 Bulletin 2024/22**

(73) Proprietor: **Takeda Vaccines, Inc.
Cambridge, MA 02139 (US)**

(72) Inventor: **SOMANADHAN, Brinda
02139 Cambridge (US)**

(74) Representative: **Maiwald GmbH
Elisenhof
Elisenstraße 3
80335 München (DE)**

(56) References cited:
**WO-A2-2022/226342     US-A- 5 178 756
US-A1- 2014 186 447     US-A1- 2022 081 468**

Remarks:
The complete document including Reference Table(s) and the Sequence Listing(s) can be downloaded from the EPO website

**Description**

**Co-filed sequence listing**

The present specification makes reference to a sequence listing (submitted electronically on the same date as the present application). The entire contents of the Sequence Listing are incorporated herein by reference.

**Technical field**

The present invention relates to methods for the quantitative determination of human serum albumin (HSA) monomer in virus-containing, in particular flavivirus, pharmaceutical compositions. The present invention also relates to the use of the methods in the quality control of virus-containing pharmaceutical compositions. In a further aspect the present invention also relate to the use of the inventive methods for monitoring the long-term stability of the HSA monomer in virus-containing pharmaceutical formulations.

**Background of the Invention**

Vaccines for protection against viral infections have been effectively used to reduce the incidence of human disease. One of the most successful technologies for viral vaccines is to immunize animals or humans with a weakened or attenuated virus strain (a "live attenuated virus"). The limited viral replication is sufficient to express the full repertoire of viral antigens and can generate potent and long-lasting immune responses to the virus. Thus, upon subsequent exposure to a pathogenic virus strain, the immunized individual is protected from the disease. These live attenuated viral vaccines are among the most successful vaccines used in public health.

Dengue disease is a mosquito-borne disease caused by infection with a dengue virus. Dengue virus infections can lead to debilitating and painful symptoms, including a sudden high fever, headaches, joint and muscle pain, nausea, vomiting and skin rashes. To date, four serotypes of dengue virus have been identified: dengue-I (DENV-I), dengue-2 (DENV-2), dengue-3 (DENV-3) and dengue-4 (DENV-4). Dengue virus serotypes 1-4 can also cause dengue hemorrhagic fever (DHF) and dengue shock syndrome (DSS). In the most severe cases, DHF and DSS can be life threatening. Dengue viruses cause 50-100 million cases of debilitating dengue fever, 500,000 cases of DHF/DSS, and more than 20,000 deaths each year, a large portion of which are children. All four dengue virus serotypes are endemic throughout the tropical regions of the world and constitute the most significant mosquito-borne viral threat to humans there. Dengue viruses are transmitted to humans primarily by *Aedes aegypti* mosquitoes, but also by *Aedes albopictus* mosquitoes. Infection with one dengue virus serotype results in life-long protection from re-infection by that serotype, but does not prevent secondary infection by one of the other three dengue virus serotypes. In fact, previous infection with one dengue virus serotype may lead to an increased risk of severe disease (DHF/DSS) upon secondary infection with a different serotype.

Takeda has developed a tetravalent dengue vaccine candidate (TAK-003). This product is now approved as QDENGA® in Indonesia. The tetravalent dengue virus composition is a dengue virus composition comprising four different immunogenic components from the four different dengue serotypes DENV-1, DENV-2, DENV-3 and DENV-4, comprising four different live, attenuated dengue viruses, each representing one dengue serotype, and which aims to stimulate immune responses to all four dengue serotypes.

Virus-containing pharmaceutical formulations frequently contain human serum albumin (HSA) as stabilizer of the active ingredients. Physical instability or denaturation of a protein often involves unfolding of the molecule. The unfolded protein is susceptible to further inactivation by aggregation. Aggregation usually leads to reduced bioactivity and immunogenic reactions, possibly because of increased molecular weight and unacceptable physical characteristics, such as the turbidity and opalescence, which gives the product undesirable properties. Like most large proteins, albumin also undergoes aggregation, the storage temperature being the main induction factor.

For quality control and reliable manufacture of vaccines including live attenuated viruses it is of utmost importance to determine the amount of HSA, in particular in its monomeric form, for example in the monovalent Bulk Drug Substance (BDS), and tetravalent vaccine drug product (DP). The determination of the amount of HSA can also be used as an in process control test (IPC) during manufacture.

In the prior art numerous techniques such as capillary electrophoresis, mass spectrometry, light scattering, size-exclusion chromatography and analytical ultracentrifugation are known for the determination of protein molecular weight of proteins. However, there is no validated method for the quantitative determination of HSA monomer in virus-containing pharmaceutical formulations, in particular for flavirus-containing vaccine formulations.

US 2014/0186447 describes in the examples a size-exclusion chromatography for the determination of HSA monomer in a composition comprising nanoparticles comprising albumin and paclitaxel. Neither the mobile phase composition nor the pH value are disclosed.

One technical problem underlying the present invention is therefore to provide such a validated method for the quantitative determination of HSA monomer, wherein the method is accurate, precise, specific and/or robust. The method shall be useful in routine methods for quality control of virus-containing complex pharmaceutical formulations.

## Summary of the Invention

The technical problems underlying the invention are solved by the provision of the subject-matter as defined in the claims.

According to a first aspect, the present invention provides a method for the quantitative determination of human serum albumin (HSA) monomer in a liquid composition comprising at least one virus and at least one pharmaceutically acceptable carrier other than HSA, wherein the method comprises the steps of:

(a) applying the liquid composition on a size-exclusion chromatography column, wherein the column material comprises diol residues coupled to a silica gel;

(b) performing size-exclusion chromatography with a mobile phase comprising a phosphate salt and a sulfate salt at a pH value from about 6 to about 8;

(c) detecting the UV absorption of the HSA monomer at the outlet of the column; and

(d) calculating the amount of HSA monomer from the area under the curve (AUC) of the detected signal.

In a second aspect the present invention provides the use of the inventive method in the quality control of an in-process monovalent drug substance, a bulk monovalent drug substance and/or a final tetravalent drug product.

In a third aspect the present invention provides the use of the inventive method for monitoring the long-term stability of the HSA monomer in virus-containing pharmaceutical formulations.

In a fourth aspect the present invention provides a quality control for vaccines containing live, attenuated dengue virus comprising performing the method according to the present invention and at least one further method selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s).

The inventors surprisingly found that the claimed method could be validated for pharmaceutical industry purposes, because it is accurate, precise, specific and robust. Since the viruses contained in the pharmaceutical formulations contain relevant amounts of different structural and non-structural proteins such as for dengue viruses e.g. the envelope protein, the pre-membrane protein, the capsid protein and, the non-structural proteins NSI, NS2A, NS2B, NS3, NS4A, NS4B, NS5 proteins, it would have been expected that these different proteins would provide relevant background complicating the analysis of HSA, in particular in its monomeric form.

This is further supported by the findings of Sviridov et al., Clinical Chemistry 52 (2006), 389-397 determining that size-exclusion HPLC does not resolve albumin from several other proteins in complex samples such as urine. The authors outlined that the albumin peak resolved by this technique, although predominantly composed of albumin, contains several coeluting globulins that would contribute to overestimation of albumin concentration by size-exclusion HPLC. The skilled person would have assumed to encounter similar problems for present complex sample comprising multiple proteins from the virus and potential fragments thereof.

The deliberate choice of the particular column material and mobile phase composition according to the present invention resulted in the provision of an excellent method. This is further improved in specific embodiments by the deliberate choice of a specific injection volume and specific flow rate which also contribute to the excellent separation capability of the present method as shown in the examples.

## Brief Description of the Drawings

**Figure 1** shows the chromatogram of HSA standard at 1 mg/mL in mobile phase buffer (MPB) [0.1M Phosphate buffer/0.1M sodium sulfate, pH 6.9].

**Figure 2** shows the chromatogram of HAS in TDV (Takeda's tetravalent Dengue Vaccine) sample (DPV024-3 BDS) [bulk drug substance].

**Figure 3** shows the linear regression analysis for the determined HSA monomer content according to the present invention when varying the injection volume used. As sample, DPV024-3 BDS has been used.

**Figure 4** shows the linear regression analysis for the determined HSA monomer content according to the present invention when varying the flow rate used. As sample, DPV024-3 BDS has been used.

## Detailed Description of the Invention

Where the term "comprise" or "comprising" is used in the present description and claims, it does not exclude other elements or steps. For the purpose of the present invention, the term "consisting of" is considered to be an optional embodiment of the term "comprising". If hereinafter a group is defined to comprise at least a certain number of embodiments, this is also to be understood to disclose a group which optionally consists only of these embodiments.

Where an indefinite or a definite article is used when referring to a singular noun e.g. "a" or "an", "the", this includes a plural form of that noun unless specifically stated.

*Vice versa,* when the plural form of a noun is used it refers also to the singular form.

Furthermore, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of $\pm$ 10%, and preferably of $\pm$ 5%. The aforementioned deviation from the indicated numerical interval of $\pm$ 10%, and preferably of $\pm$ 5% is also indicated by the terms "about" and "approximately" used herein with respect to a numerical value.

According to the first aspect, the present invention provides a method for the quantitative determination of human serum albumin (HSA) monomer in a liquid composition comprising at least one virus and at least one pharmaceutically acceptable carrier other than HSA, wherein the method comprises the steps of:

(a) applying the liquid composition on a size-exclusion chromatography column, wherein the column material comprises diol residues coupled to a silica gel;

(b) performing size-exclusion chromatograpy with a mobile phase comprising a phosphate salt and a sulfate salt at a pH value from about 6 to about 8;

(c) detecting the UV absorption of the HSA monomer at the outlet of the column; and

(d) calculating the amount of HSA monomer from the area under the curve (AUC) of the detected signal.

In a preferred embodiment the at least one virus is selected from a flavivirus. Flaviviruses include dengue virus, Yellow Fever virus, Japanese Encephalitis virus, Murray Valley encephalitis virus and West Nile virus. In a more preferred embodiment the flavivirus is a dengue virus.

"An attenuated virus" herein means that the virus has a reduced replication capacity and/or a reduced infectivity in host cells compared to wild-type virus. The replication capacity and/or infectivity may be determined *in vitro* in suitable cell systems or *in vivo* in suitable animal models. Attenuation may be achieved by serial passaging of the virus in a foreign host such as in tissue culture, embryonated eggs or live animals. Alternatively, attenuation may be performed by chemical agents.

"Live attenuated" viruses are important for use in viral vaccines, since the live attenuated virus generates a stronger immune response compared to an inactivated virus. As used herein, the term "live attenuated virus" can refer to e.g. a chimeric virus or a non-chimeric virus.

In embodiments where the flavivirus composition comprises more than one live, attenuated virus, the composition in a preferred embodiment comprises at least one chimeric live attenuated flavivirus. More preferably, the composition comprises one chimeric flavivirus and three non-chimeric flaviviruses. Particularly preferred, the composition comprises live, attenuated DENV-1, DENV-2 and DENV-4 viruses and a chimeric DENV-2/DENV-4 chimeric virus.

In an alternative preferred embodiment the composition comprises at least two chimeric live, attenuated viruses and at least one non-chimeric flavivirus. More preferably, the composition comprises a live, attenuated DENV-2 virus, a chimeric DENV-2/DENV-1 virus, a chimeric DENV-2/DENV-3 virus and a chimeric DENV-2/DEN-4 virus.

## Dengue virus

"Dengue virus" herein includes any wild-type or dengue virus mutant. The mutant may naturally occur or obtained by genetic engineering of the wild-type virus. The genetic modifications include additions, deletions, insertions and/or substitutions. The modifications are not particularly limited.

The term "dengue virus" also includes chimeras with genetic information from at least one further virus. The chimera may contain genetic information from another flavivirus such as Yellow Fever virus, Japanese Encephalitis virus, Murray Valley encephalitis virus and West Nile virus. Preferably, the chimera includes at least the E gene from another dengue virus strain.

Most preferably, the term "dengue chimera" is a dengue/dengue chimera derived from two different dengue viruses. Multivalent compositions comprising three or tetravalent compositions comprising four dengue/dengue chimeras are particularly envisaged.

The dengue virus is a single stranded, positive sense RNA virus of the family flaviviridae. The family flaviviridae includes three genera, flavivirus, hepacivirus and pestivirus. The genus flavivirus contains highly pathogenic and potentially hemorrhagic fever viruses, such as yellow fever virus and dengue virus, encephalitic viruses, such as Japanese encephalitis virus, Murray Valley encephalitis virus and West Nile virus, and a number of less pathogenic viruses.

The flavivirus genome comprises in 5' to 3' direction:

- a 5'-noncoding region (5'-NCR),
- a capsid protein (C) encoding region,
- a pre-membrane protein (prM) encoding region,
- an envelope protein (E) encoding region,
- a region encoding nonstructural proteins (NSI, NS2A, NS2B, NS3, NS4A, NS4B, NS5) and
- a 3' noncoding region (3'-NCR).

The viral structural proteins are C, prM and E, and the nonstructural proteins are NSI to NS5. The structural and nonstructural proteins are translated as a single polyprotein and processed by cellular and viral proteases.

The dengue virus also includes dengue virus chimera comprising more than one dengue virus subtype. Suitable variants of dengue virus chimera are described in detail in WO 2020/051328. The disclosure of which is incorporated herein by reference. Preferably, the methods according to the invention are used for determining the virus titer of the dengue virus variants TDV-1, TDV-2, TDV-3 and TDV-4 outlined below.

The term also includes dengue virus chimera comprising genetic information from another flavivirus. Preferably, the other flavivirus is selected from Japanese encephalitis virus, Tick-borne encephalitis virus, West Nile virus, Yellow fever virus and Zika virus.

"Dengue virus vaccine composition" herein includes monovalent compositions comprising only a single dengue virus or a dengue virus chimera. It also includes a flavivirus chimera comprising at least the E gene from dengue virus. The term also includes multivalent composition comprising more than one single dengue virus or chimera or flavivirus chimera comprising at least the E gene from dengue virus. Preferably, the multivalent compositions include dengue virus from more than one subtype, wherein the subtype is selected from DENV-1, DENV-2, DENV-3 and DENV-4. More preferably, the multivalent composition is a tetravalent composition comprising dengue viruses and/or chimeras from each dengue virus subtype.

The dengue virus structural envelope (E) protein and pre-membrane (prM) protein have been identified as the primary antigens that elicit a neutralizing protective antibody response. For creation of the tetravalent dengue vaccine (TDV), TDV-2 was modified by replacing the nucleic acid sequence encoding the DENV-2 prM and E glycoproteins with the nucleic acid sequence encoding the corresponding wild type prM and E glycoproteins from the DENV-1, DENV-3, and DENV-4 wild type strains DENV-1 16007, DENV-3 16562 or DENV-4 1036 virus, respectively, using standard molecular genetic engineering methods (Huang et al. (2003) J. Virol. 77(21): 11436-11447).

**Table 1. Sequences of the TDV virus strains**

| SEQ ID NO. | dengue virus strain | sequence type |
|---|---|---|
| SEQ ID NO. 1 | TDV-1 | amino acid sequence |
| SEQ ID NO. 2 | TDV-2 | amino acid sequence |
| SEQ ID NO. 3 | TDV-3 | amino acid sequence |
| SEQ ID NO. 4 | TDV-4 | amino acid sequence |

"at least one pharmaceutically acceptable carrier other than HSA". The skilled person is aware of pharmaceutically acceptable carriers suitable for the preparation of pharmaceutical formulations, in particular liquid formulations or formulations to be lyophilized. The term includes any suitable diluent or excipient including any pharmaceutical agent that does not in itself induce the production of antibodies harmful to the individula receiving the composition, and which may be administered without undue toxicity.

The term includes, but is not limited to : vehicle solvents such as water, alcohol, glycerin, propylene glycol; co-solvents such as glycerol, propylene glycol, ethanol, polyethylene glycols; surfactants such as anionic, cationic, zwitterionic or nonionic. The term also includes preservatives and viscosity modifiers or suspending agents. The term further includes substances to stabilize pH, or to function as adjuvants, wetting agents, or emulsifying agents, which can serve to improve the effectiveness of the vaccine. Preferably, the pharmaceutically acceptable carrier other than HSA is selected from the group consisting of trehalose, poloxamer, urea, arginine hydrochloride, tromethamine, Tris-hydrochloride, chloride salts, and phosphate salts or any combination thereof. Preferably, trehalose is $\alpha,\alpha$-trehalose dihydrate. Preferably, poloxamer is poloxamer 407, also known by its trade names Pluronic F127 and Synperonic PE/F127. Preferably, the chloride salts may comprise or consist of one or both of potassium chloride and sodium chloride. Preferably, the phosphate salts may comprise or consist of one or both of potassium dihydrogen phosphate and disodium hydrogen phosphate.

In one preferred such embodiment, the excipients are a combination of trehalose, at least one poloxamer, and human serum albumin. More preferably, the excipients are a combination of trehalose, poloxamer, human serum albumin, chloride salts, and phosphate salts. Most preferably, the excipients are a combination of $\alpha,\alpha$-trehalose dihydrate, poloxamer 407, human serum albumin, potassium chloride, sodium chloride, potassium dihydrogen phosphate, and disodium hydrogen phosphate.

In another preferred such embodiment, the excipients are a combination of trehalose, at least one poloxamer, urea, arginine hydrochloride, tromethamine, Tris-hydrochloride and human serum albumin. More preferably, the excipients are a combination of trehalose, poloxamer, urea, arginine hydrochloride, tromethamine, human serum albumin, chloride salts and phosphate salts. Preferably, the chloride salts comprise or consist of sodium chloride and potassium chloride. Preferably, the phosphate salts comprise or consist of potassium dihydrogen phosphate and disodium hydrogen phosphate. Most preferably, the excipients are a combination of $\alpha,\alpha$-trehalose, poloxamer 407, urea, L-arginine hydrochloride, tromethamine, Tris-hydrochloride, human serum albumin, potassium dihydrogen phosphate, disodium hydrogen phosphate, potassium chloride and sodium chloride.

The liquid composition may be obtained by mixing the one or more virus with a pharmaceutically acceptable carrier in a suitable solvent. The liquid composition herein includes a reconstituted lyophilized composition. Reconstitution may be achieved with a suitable solvent or buffer.

(a) applying the liquid composition on a size-exclusion chromatography column, wherein the column material comprises diol residues coupled to a silica gel;

Size-exclusion chromatography columns may be obtained commercially or be prepared by the skilled person. The column material according to the present invention is a silica gel to which diol residues are covalently bound. Preferably, the diol residues are dihydroxypropyl residues. Such a modified column material is commercially available e.g. as YMC-Pack Diol (YMC Co., Ltd.). This material available as Pack Diol-60, Diol-120, Diol-200 and Diol-300. Preferably, the material is YMC Pack Diol-200.

The column is preferably installed in an HPLC system which are commercially available such as e.g. Thermo Fisher/Dionex HPLC system with UV detector (DAD).

The column temperature is preferably about $20\pm2$ °C. As injection volume of the liquid composition, preferably about 5 to 15 $\mu$L, more preferably about 10 $\mu$L.

Prior to the application of the liquid composition, the column material may be washed and equilibrated.

(b) performing size-exclusion chromatography with a mobile phase comprising a phosphate salt and a sulfate salt at a pH value from about 6 to about 8;

Preferably, the mobile phase comprises about 0.08 to about 0.12 M phosphate buffer with about 0.08 M to about 0.12 M sodium sulfate at a pH value from about 6.8 to about 7.0. More preferably, the mobile phase consists of about 0.1 M phosphate buffer with about 0.1 M sodium sulfate at a pH value of about 6.9.

Preferably, the size exclusion chromatography is performed in an isocratic manner, i.e. without changing the mobile phase.

In one preferred embodiment the size-exclusion chromatography in step (b) is performed at a flow rate of about 0.7 to about 0.9 mL/min. More preferably, the flow rate is about 0.8 mL/min.

(c) detecting the UV absorption of the HSA monomer at the outlet of the column; and

In one preferred embodiment the used detector is a diode array detector (DAD). Preferably, the absorption of the eluate at a wavelength of about 210 to about 220 nm, more preferably of about 214 nm is detected. Before a complex sample is separated by size-exclusion chromatography the retention time of HSA monomer of standard solutions is determined.

Preferably, at a flow rate of 0.7 mL/min the HSA monomer elutes with a retention time of the peak at about 13.5 to 13.7 min; at a flow rate of 0.8 mL/min the HSA monomer elutes with a retention time of the peak at about 11.8 to about 12 min; at a flow rate of 0.9 mL/min with a retention time of the peak at about 10.5 to about 10.7 min.

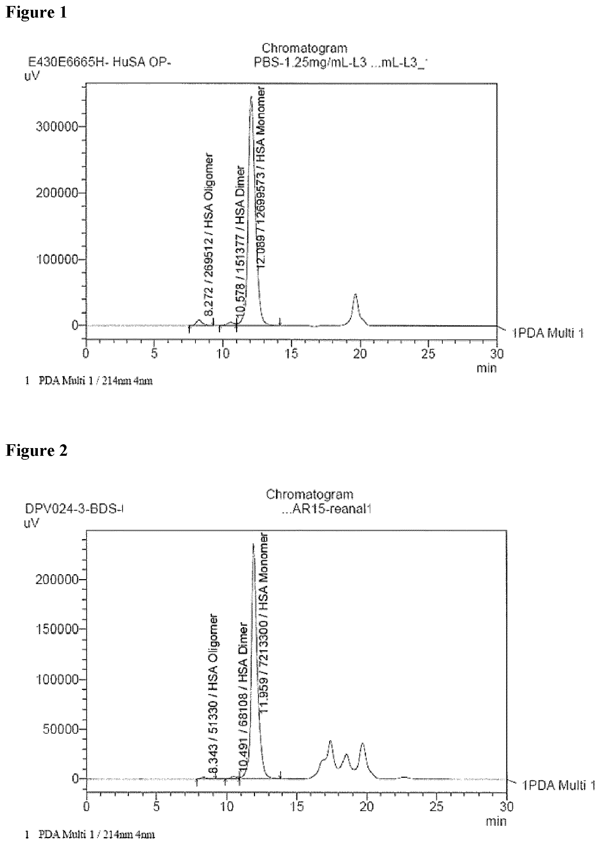

As can be seen from the appended Figures 1 and 2, the HSA monomer peak is baseline separated from the further peaks in the chromatogram.

(d) calculating the amount of HSA monomer from the area under the curve (AUC) of the detected signal.

The calculation of the amount of the HSA monomer may be carried out any suitable HPLC software may be used, in which the mathematical relationship between the inserted substance quantity and the determined peak area of the HSA peak is stored.

Preferably, the Chromeleon software (Thermo Fisher, Inc.) may be used.

In one more preferred embodiment the inventive method comprises the steps of

(a) applying about 5 μL to about 15 μL of the liquid composition on a size-exclusion chromatography column, wherein the column material comprises diol residues coupled to a silica gel;

(b) performing size-exclusion chromatography at a flow rate of about 0.7 to about 0.9 mL/min with a mobile phase comprising about 0.08 to about 0.12 M phosphate buffer with about 0.08 M to about 0.12 M sodium sulfate at a pH value from about 6.8 to about 7.0;

(c) detecting the UV absorption of the HSA monomer at the outlet of the column; and

(d) calculating the amount of HSA monomer from the area under the curve (AUC) of the detected signal.

In a further aspect the present invention provides the use of the inventive method in the quality control of a virus preparation containing HSA or a vaccine composition containing HSA. The reliable determination of HSA monomer is highly relevant at different stages of the vaccine manufacturing and filling of the final product. In addition, it is important for assessing the HSA monomer concentration of the monovalent drug substance and before and after the final formulation of the tetravalent drug product.

The determination of HSA monomer is also relevant for HSA containing buffers used for the preparation of the final virus containing buffers. Preferably, the method according to the present invention may be used for the determination of the HSA monomer in the Fixed Excipient Buffer (FEB) or in the Variable Excipient Buffer (VEB).

The composition of the FEB is 150 g/L α,α-trehalose, dihydrate, 10.0 g/L Kolliphor P407 (F127), 1.00 g/L HSA, 0.939 mM potassium dihydrogen phosphate, 5.33 mM disodium hydrogen phosphate, dihydrate, 1.44 mM potassium chloride and 124 mM sodium chloride. The composition of the VEB (utilizing a 20 % HSA stock solution) is 204 g/L α,α-trehalose, dihydrate, 10.0 g/L Kolliphor P407 (F127), 1.00 g/L HSA, 3.76 mM potassium dihydrogen phosphate, 21.4 mM disodium hydrogen phosphate, dihydrate, 5.76 mM potassium chloride and 41.6 mM sodium chloride.

In a further aspect the present invention provides the use of the inventive method for monitoring the long-term stability of the HSA monomer in virus-containing pharmaceutical formulations. It is also of utmost importance to monitor the long-term stability of the HSA monomer to determine the relevant shelf-life of the virus-containing pharmaceutical composition.

In a further aspect the present invention provides a quality control for vaccines containing live, attenuated dengue virus comprising performing the method according to the present invention and at least one further method selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s).

In an embodiment, the quality control method comprises or consists of the method of the first aspect of the invention and at least two further methods selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s). In an embodiment, the quality control method comprises or consists of the method of the first aspect of the invention and at least three further methods selected from the group consisting of identity assay , immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s). In an embodiment, the quality control method comprises or consists of the method of the first aspect of the invention and at least four further methods selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s). In an embodiment, the quality control method comprises or consists of the method of the first aspect of the invention and at least five further methods selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s). In an embodiment, the quality control method comprises or consists of the method of the first aspect of the invention and at least six further methods selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s). In an embodiment, the quality control method comprises or consists of the method of the first aspect of the invention and at least seven further methods selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s). In an embodiment, the quality control method comprises or consists of the method of the first aspect of the invention and at least eight further methods selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s). In an embodiment, the quality control method comprises or consists of the method of the first aspect of the invention and at least nine further methods selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s). In an embodiment, the quality control method comprises or consists of the method of the first aspect of the invention and all of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s).

In one embodiment, the one or more excipients may be selected from the group consisting of trehalose, poloxamer, urea, arginine hydrochloride, tromethamine, Tris-hydrochloride, human serum albumin, chloride salts, and phosphate salts or any combination thereof. Preferably, trehalose is α,α-trehalose dihydrate. Preferably, poloxamer is poloxamer 407, also known by its trade names Pluronic F127 and Synperonic PE/F127. Preferably, the chloride salts may comprise or consist of one or both of potassium chloride and sodium chloride. Preferably, the phosphate salts may comprise or consist of one or both of potassium dihydrogen phosphate and disodium hydrogen phosphate.

In one preferred such embodiment, the excipients are a combination of trehalose, at least one poloxamer, and human serum albumin. More preferably, the excipients are a combination of trehalose, poloxamer, human serum albumin, chloride salts, and phosphate salts. Most preferably, the excipients are a combination of α,α-trehalose dihydrate, poloxamer 407, human serum albumin, potassium chloride, sodium chloride, potassium dihydrogen phosphate, and disodium hydrogen phosphate.

In another preferred such embodiment, the excipients are a combination of trehalose, at least one poloxamer, urea, arginine hydrochloride, tromethamine, Tris-hydrochloride, and human serum albumin. More preferably, the excipients are a combination of trehalose, poloxamer, urea, arginine hydrochloride, tromethamine, human serum albumin, chloride salts and phosphate salts. Preferably, the chloride salts comprise or consist of sodium chloride.

The invention is further described in the following examples which are solely for the purpose of illustrating specific embodiments of the invention, and are also not to be construed as limiting the scope of the invention in any way.

## Examples

The following Examples are included to demonstrate certain aspects and embodiments of the invention as described in the claims. It should be appreciated by those of skill in the art, however, that the following description is illustrative only and should not be taken in any way as a restriction of the invention.

### Dengue virus strains used in the examples

The methods used to generate the chimeric dengue strains TDV-1, -3 and -4 were standard molecular cloning and DNA engineering methods and are described in Huang et al. (2003) J. Virology 77(21): 11436-11447.

The amino acid sequences of TDV-1 to TDV-4 used in the present example are shown in Table 1 above and the accompanying sequence listing.

## HUMAN SERUM ALBUMIN (SE-HPLC): INTRODUCTION

A size exclusion high-pressure liquid chromatography (SE-HPLC) method is used to identify and measure the amounts of HSA in TDV drug product. Samples are analyzed using a 30-minute isocratic method using 0.1 M phosphate buffer at pH 6.9 containing 0.1 M sodium sulfate as the mobile phase at a flow rate of 0.8 mL/minute. The reconstituted lyophilized drug product material is injected as neat sample into the YMC-Pack-Diol 200 (300 $\times$ 8 mm, 5 $\mu$m, 20 nm pore size) size exclusion column which is monitored at UV 214 nm. HSA separates into the monomer, dimer and oligomer peaks under these conditions. Accurate quantitation is achieved by comparing the test sample peak area to an external standard curve, prepared using albumin standards and assayed at the same time. The monomer concentration is reported in mg/mL.

## SAMPLE AND STANDARD PREPARATION

Drug product formulations are targeted to contain 1.0 mg/mL of HSA and are analyzed as neat samples. External standards are prepared to obtain the concentration range 0.156-1.75 mg/mL in Mobile Phase Buffer (MPB) [0.1M Phosphate buffer/0.1M sodium sulfate, pH 6.9].

### Standard Preparation

### Reference Stock Solution

The aliquoted stock HSA standard is filtered through a 0.2 $\mu$m PES filter immediately before analysis. The aliquot is drawn up completely into the syringe and filtered. 2 mL of the filtrate is discarded and 1 mL is collected into a 1.5-mL Eppendorf tube.

### Reference Solution

Reference solutions are prepared with mobile phase buffer (MPB) to obtain the concentration range 0.156 mg/mL to 1.75 mg/mL using the dilution scheme given below in Table 2.a. Solution 5 to Solution 10 are used as standards for analysis.

### Table 2.a Preparation of HSA Standard Solutions

| Solution No. | 1 | 2 | 3 | 4 | 5 | 6 | 7 | 8 | 9 | 10 |
|---|---|---|---|---|---|---|---|---|---|---|
| Concentration (mg/mL) | 20 | 10 | 5 | 2.50 | 1.75 | 1.25 | 1.00 | 0.62 5 | 0.31 2 | 0.15 6 |
| HSA ($\mu$L) | 100 | 500 of 1 | 500 of 2 | 500 of 3 | 175 of 3 | 500 of 4 | 50 of 2 | 500 of 6 | 500 of 8 | 500 of 9 |
| Mobile phase buffer ($\mu$L) | 900 | 500 | 500 | 500 | 325 | 500 | 450 | 500 | 500 | 500 |

### System Suitability Solution

Reference Solution 7 (1.0 mg/mL of HSA in mobile phase buffer) is used.

### Sample Preparation

The lyophilizate DP vial (1 mg/mL) is removed from cold storage and re-suspension is performed by pipetting 590 $\mu$L of TDV diluent (37 mM NaCl) into the opened vial. The reconstituted drug product sample is transferred into HPLC vials. Each sample is taken in two HPLC vials and each vial is injected twice for analysis.

## INSTRUMENT AND INSTRUMENT PARAMETERS

A qualified high pressure chromatographic system equipped with a UV detector. The instrument operating parameters are listed in Table 3.a.

### Table 3.a Operating Conditions for the HSA HPLC Method

| Description [a] | HPLC Conditions |
| --- | --- |
| HPLC | Thermo Fisher/Dionex HPLC system with UV detector (DAD) |
| Mobile phase | 0.1 M PBS in 0.1 M sodium sulfate at pH 6.9 |
| Flow rate | 0.8 mL/min |
| Elution condition | Isocratic |
| Column | YMC Pack-Diol-200, (300 mm $\times$ 8 mm), 5 $\mu$m, 20 nm pore size |
| Pre-column | YMC Pack-Diol-200, (30 mm $\times$ 8 mm), 5 $\mu$m, 20 nm pore size |
| Column type | Size exclusion |
| Column temperature | 20°C$\pm$2°C |
| Autosampler temperature | 4°C |
| Injector volume | 10 $\mu$L |
| Flow rate | 0.8 mL/min |
| Detection wavelength | 214 nm |
| Run time | 30 min |

(a) Equivalent instruments may be qualified and used.

## DATA EVALUATION

The determination of the content is carried out using the Chromeleon software (any suitable HPLC software may be used), in which the mathematical relationship between the inserted substance quantity and the determined peak area of the HSA peak is stored. Prior to data evaluation, the chromatograms are checked to ensure that automatic integration is performed in the correct manner.

### Calculation Formula for Calculating the Concentrations of the Dilution Series

$$\frac{c_{theor.sol.\ No.x} * c_{STDcurr.}}{c_{STDtheor.}} = c_{solution\ No.x}\left(mg/ml\right)$$

$c_{theor.sol.\ No.x}$   Theoretical HSA concentration in solution No.x
$c_{STDcurr}$   Currently declared HSA concentration of the HSA stock solution (mg/mL or %)
$c_{STDtheor}$   Declared HSA concentration in the HSA stock solution (200 mg/ml or 20%)
$c_{solution\ No.x}$   Calculated HSA concentration in solution No.x

The formula is applied for Standard Solution 5 (1.75 mg/mL) through 10 (0.156 mg/mL), which are used for the calibration curve.

### Calculation of the HSA Content in the Sample Solution

The HSA content in the sample solutions is calculated based on the calibration curve according to the following formula:

$$\frac{A_{ss} - n}{m} * F = C_{ss}\ (mg/mL)$$

$A_{ss}$   Peak area of the sample solution (mAU·min)

n       Offset of the calibration curve (mAU·min)

m      Slope of the calibration curve (mAU·min/[mg/mL])

F       Dilution factor of the sample (1 or 3 for diluted samples)

$C_{ss}$      Calculated HSA concentration of the sample solution (mg/mL)

For each sample, 4 individual results are obtained which is averaged to generate one result.

It could be shown that the above described method is accurate, specific and robust for the monovalent drug substance, the tetravalent drug product and the filled and finished product. The method has accordingly been validated as a release assay for the quality control in the pharmaceutical industry.

A sumary of the obtained results is shown below in Table 4:

| Parameter | Result |
|---|---|
| Specificity | Specific for HSA |
| Linearity | 0.50 -2.50 mg/mL<br>Correlation Coefficient 'r' = 0.9930 |
| Accuracy | Average recovery: 99.89% to 100.58% |
| Precision (Repeatability)[1] | %CV ≤3.67% |
| Precision (Intermediate Precision)[1] | %CV ≤ 8.57% |
| Range | 0.50 - 2.50 mg/mL |
| Robustness : Injection Volume | Pass |
| Robustness: Flow Rate | Pass |
| Robustness: HSA Temperature and Thaw effects | Pass |
| Robustness: Column Batch | Pass |
| Robustness: HSA Stability in the autosampler at 4°C | Pass |
| [1] The reported CV% corresponds to the value determined at a target concentration of 1mg/mL of HSA | |

**Parameter: Injection Volume**

5 µL to 20 µL DPV024-3 BDS have been used as injection volumes.

The observed amount obtained at varied injection volumes were analyzed using basic statistics and using linear regression using ADAPT.

Sample: DPV024-3 BDS

Results are summarised in (Table 5) and linear regression results are given in (Table 6).

**Table 5: Summary Statistics - Variable Injection volumes - obs. Amt. DPV024-3 BDS**

| Injection Volume (DPV024-3 BDS-1mg/-mL) | n | Retention Time Mean (minutes) | Observed Amt. Mean | Observed Amt. Minimum | Observed Amt. Maximum | Standard Deviation | Coefficient of Variation | Lower 95% CI for Mean | Upper 95% CI for Mean |
|---|---|---|---|---|---|---|---|---|---|
| 5µL | 4 | 11.96 | 0.3313 | 0.3280 | 0.3330 | 0.0024 | 0.71% | 0.3275 | 0.3350 |
| 10µL | 6 | 11.95 | 0.6653 | 0.6610 | 0.6690 | 0.0029 | 0.43% | 0.6623 | 0.6684 |
| 15µL | 4 | 11.98 | 0.9950 | 0.9940 | 0.9960 | 0.0008 | 0.08% | 0.9937 | 0.9963 |
| 20µL | 5 | 11.98 | 1.3180 | 1.2970 | 1.3290 | 0.0129 | 0.98% | 1.3020 | 1.3340 |

The overall %CV corresponding to injection precision across 4 injection volumes ranged from 0.08% - 0.98 % for DPV024-3 BDS sample.

**Table 6: Linear Regression Results - Injection Volume - Obs. Amt. - DPV024-3 BDS**

| Parameter | Estimate | 95% Confidence Level | |
|---|---|---|---|
| | | Lower | Upper |
| Slope | 0.06574 | 0.06511 | 0.06637 |
| Constant | 0.00578 | -0.00294 | 0.01449 |
| r (Correlation Coeff.) | 0.99982 | | |
| R-Square | 0.99965 | | |
| STD Deviation (s) | 0.00715 | | |

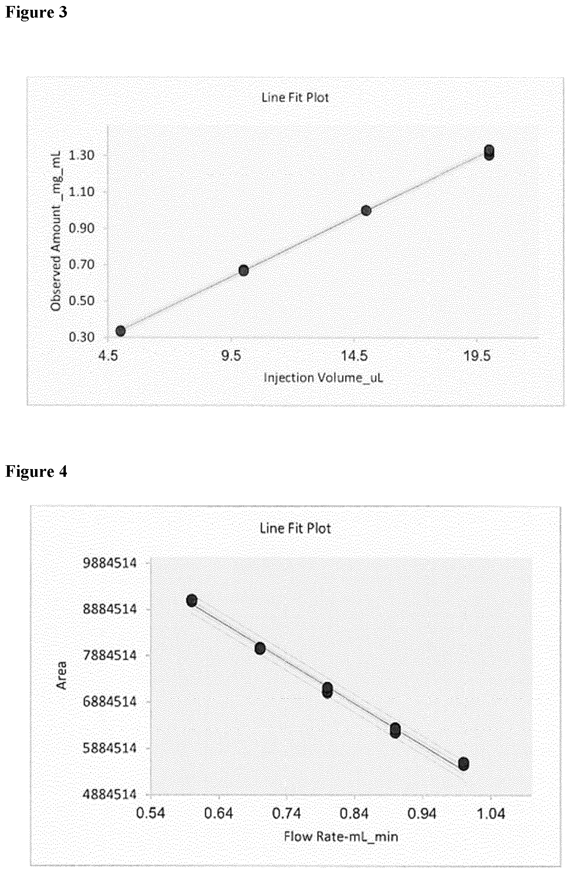

Linear regression analysis using varied injection volumes against Observed Amounts showed a good correlation coefficient (r) value of 0.999 corresponding to a strong linear response for the DPV024-3 BDS sample. Changing the injection volume did not have any impact on the chromatograms or the retention time of the peaks. The overall % CV based on injection precision ranged from 0.08% to 0.98 % for the two samples used. The result is shown in Figure 3.

The volume analyzed was 2x lower, (1.5x and 2x) higher than the standard injection volume of 10 $\mu$l. Thus either of the volumes above and below the standard injection volume can be used to carry out the analysis demonstrating the method robustness.

**Parameter: Flow Rate**

Neat samples were evaluated using 5 different flow rates [0.6mL/min, 0.7mL/min, 0.8mL/min (standard flow rate), 0.9 mL/min and 1mL/min] using DPV024-3 BDS.

The peak areas obtained at varied flow rates were analyzed using basic statistics and using linear regression using ADAPT.

Sample: DPV024-3 BDS

Results are summarised in Table 7 and linear regression results are given in Table 8.

**Table 7: Summary Statistics - Variable Flow Rate - Peak Area - DPV024-3 BDS**

| Flow Rate (DPV024-3 BDS-1m-g/mL) | n | Retention time (minutes) Mean | Peak Area Mean | Peak Area Minimum | Peak Area Maximum | Standard Deviation | Coefficient of Variation | Lower 95% CI for Mean | Upper 95% CI for Mean |
|---|---|---|---|---|---|---|---|---|---|
| 0.6 mL/min | 4 | 15.89 | 9089471 | 9056221 | 9105678 | 22461 | 0.002 | 9053731 | 9125210 |
| 0.7 mL/min | 4 | 13.62 | 8049465 | 8023569 | 8068434 | 19540 | 0.002 | 8018373 | 8080557 |
| 0.8 mL/min | 4 | 11.94 | 7146552 | 7084500 | 7204763 | 54883 | 0.008 | 7059220 | 7233883 |
| 0.9 mL/min | 4 | 10.63 | 6294290 | 6234526 | 6338576 | 43683 | 0.007 | 6224781 | 6363799 |
| 1mL/min | 2 | 9.61 | 5566448 | 5533059 | 5599836 | 47218 | 0.008 | 5142206 | 5990689 |

The overall %CV corresponding to flow precision across 5 different flow rates ranged from 0.002% -0.008 % for DPV024-3 BDS sample.

As can be seen, the retention time of the HSA monomer depends on the applied flow rate. A flow rate of 0.8 mL/min was considered to be optimal for the validation of the method.

**Table 8: linear regression results - Flow Rate vs. Peak Area - DPV024-3 BDS**

| Parameter | Estimate | 95% Confidence Level | |
| --- | --- | --- | --- |
| | | Lower | Upper |
| Slope | -8940430 | -9275314 | -8605547 |
| Constant | 14367668 | 14103509 | 14631828 |
| r (Correlation Coeff.) | 0.99751 | | |
| R-Square | 0.99503 | | |
| STD Deviation (s) | 88112 | | |

Linear regression analysis using varied flow rates against peak areas a good correlation coefficient (r) value of 0.997 for the DPV024-3 BDS sample corresponding to a strong linear response. The overall % CV based on injection precision ranged from 0.002% to 1.957 % for the two samples used. The result is shown in Figure 4.

The flow rates analyzed was 0.2 mL/ minute lower and 0.2 ml/minute higher than the standard flow rate of 0.8 ml/minute. Flow rate change is considered robust based on the results observed.

## Claims

1. A method for the quantitative determination of human serum albumin (HSA) monomer in a liquid composition comprising at least one virus and at least one pharmaceutically acceptable carrier other than HSA, wherein the method comprises the steps of:

   (a) applying the liquid composition on a size-exclusion chromatography column, wherein the column material comprises diol residues coupled to a silica gel;
   (b) performing size-exclusion chromatography with a mobile phase comprising a phosphate salt and a sulfate salt at a pH value from about 6 to about 8;
   (c) detecting the UV absorption of the HSA monomer at the outlet of the column; and
   (d) calculating the amount of HSA monomer from the area under the curve (AUC) of the detected signal.

2. The method of claim 1, wherein the at least one virus is selected from a flavivirus, more preferably the flavivirus is a dengue virus.

3. The method of claim 1 or 2, wherein the at least one virus is an attenuated dengue virus, preferably the attenuated virus is selected from TDV-1 to TDV-4 (SEQ ID Nos: 1 to 4), and any combination thereof.

4. The method of any one of claims 1 to 3, wherein the liquid composition is a vaccine composition.

5. The method of any one of claims 1 to 4, wherein the liquid composition is obtained by reconstitution of a lyophilized vaccine composition.

6. The method according to any one of claims 1 to 5, wherein the column material of step (a) has a pore size of about 15 to 30 nm, preferably about 18 to 22 nm.

7. The method according to any one of claims 1 to 6, wherein the column material comprises dihydroxypropyl residues coupled to the silica gel.

8. The method according to any one of claims 1 to 7, wherein the mobile phase comprises about 0.08 to about 0.12 M phosphate buffer with about 0.08 M to about 0.12 M sodium sulfate at a pH value from about 6.8 to about 7.0.

9. The method according to any one of claims 1 to 8, wherein the injection volume of the liquid composition applied in step (a) is about 5 to 15 μL.

10. The method according to any one of claims 1 to 9, wherein the size-exclusion chromatography in step (b) is performed at a flow rate of about 0.7 to about 0.9 mL/min.

11. The method according to any one of claims 1 to 10, wherein the concentration of the HSA in the liquid composition is in the range from 0.15 mg/mL to about 2 mg/mL, preferably about 0.8 to about 1.2 mg/L.

12. The method according to any one of claims 1 to 11, wherein the at least one pharmaceutically acceptable carrier other than HSA is selected from the group consisting of trehalose, poloxamer, urea, arginine hydrochloride, tromethamine, Tris-hydrochloride, chloride salts, and phosphate salts or any combination thereof.

13. The method according to any one of claims 1 to 12, wherein the method comprises the steps of:

(a) applying about 5 $\mu$L to about 15 $\mu$L of the liquid composition on a size-exclusion chromatography column, wherein the column material comprises diol residues coupled to a silica gel;
(b) performing size-exclusion chromatography at a flow rate of about 0.7 to about 0.9 mL/min with a mobile phase comprising about 0.08 to about 0.12 M phosphate buffer with about 0.08 M to about 0.12 M sodium sulfate at a pH value from about 6.8 to about 7.0;
(c) detecting the UV absorption of the HSA monomer at the outlet of the column; and
(d) calculating the amount of HSA monomer from the area under the curve (AUC) of the detected signal.

14. Use of the method according to any one of claims 1 to 13 in the quality control of an in-process monovalent drug substance, a bulk monovalent drug substance and/or a final tetravalent drug product.

15. Use of the method according to claim 14, wherein the monovalent drug substance comprises a dengue virus selected from TDV-1 to TDV-4 and the tetravalent drug product comprises each of TDV-1 to TDV-4.

16. Use of the method according to any one of claims 1 to 13 for monitoring the long-term stability of the HSA monomer in virus-containing pharmaceutical formulations.

17. A quality control method for vaccines containing live, attenuated dengue virus comprising performing the method according to any one of claims 1 to 13 and at least one further method selected from the group consisting of identity assay, immunofocus assay, visual inspection, determination of reconstitution time or resuspendability of lyophilisates, sterility test, test for bacterial endotoxins, determination of host cell DNA, determination of pH, colorimetric determination of water, determination of osmolality, determination of the content of one or more excipient(s).

**Patentansprüche**

1. Verfahren zur quantitativen Bestimmung von menschlichem Serumalbuminmonomer (HSA-Monomer) in einer flüssigen Zusammensetzung, die mindestens ein Virus und mindestens einen von HSA verschiedenen pharmazeutisch annehmbaren Träger umfasst, wobei das Verfahren die folgenden Schritte umfasst:

(a) Aufbringen der flüssigen Zusammensetzung auf eine Größenausschlusschromatographiesäule, wobei das Säulenmaterial mit einem Kieselgel gekoppelte Diolreste umfasst;
(b) Durchführen einer Größenausschlusschromatographie mit einer mobilen Phase, die ein Phosphatsalz und ein Sulfatsalz bei einem pH-Wert von etwa 6 bis etwa 8 umfasst;
(c) Detektieren der UV-Absorption des HSA-Monomers an dem Ausgang der Säule; und
(d) Berechnen der Menge an HSA-Monomer anhand der Fläche unter der Kurve (AUC) des detektierten Signals.

2. Verfahren nach Anspruch 1, wobei das mindestens eine Virus ausgewählt ist aus einem Flavivirus, besonders bevorzugt ist das Flavivirus ein Dengue-Virus.

3. Verfahren nach Anspruch 1 oder 2, wobei das mindestens eine Virus ein attenuiertes Dengue-Virus ist, vorzugsweise ist das attenuierte Virus ausgewählt aus TDV-1 bis TDV-4 (SEQ ID NO: 1 bis 4) und einer beliebigen Kombination davon.

4. Verfahren nach einem der Ansprüche 1 bis 3, wobei die flüssige Zusammensetzung eine Impfstoffzusammensetzung ist.

5. Verfahren nach einem der Ansprüche 1 bis 4, wobei die flüssige Zusammensetzung durch Rekonstitution einer lyophilisierten Impfstoffzusammensetzung erlangt wird.

6. Verfahren nach einem der Ansprüche 1 bis 5, wobei das Säulenmaterial aus Schritt (a) eine Porengröße von etwa 15 bis 30 nm, vorzugsweise etwa 18 bis 22 nm aufweist.

7. Verfahren nach einem der Ansprüche 1 bis 6, wobei das Säulenmaterial mit dem Kieselgel gekoppelte Dihydroxypropylreste umfasst.

8. Verfahren nach einem der Ansprüche 1 bis 7, wobei die mobile Phase etwa 0,08 bis etwa 0,12 M Phosphatpuffer mit etwa 0,08 M bis etwa 0,12 M Natriumsulfat bei einem pH-Wert von etwa 6,8 bis etwa 7,0 umfasst.

9. Verfahren nach einem der Ansprüche 1 bis 8, wobei das Injektionsvolumen der in Schritt (a) aufgebrachten flüssigen Zusammensetzung etwa 5 bis 15 µl beträgt.

10. Verfahren nach einem der Ansprüche 1 bis 9, wobei die Größenausschlusschromatographie in Schritt (b) mit einer Flussrate von etwa 0,7 bis etwa 0,9 ml/min durchgeführt wird.

11. Verfahren nach einem der Ansprüche 1 bis 10, wobei die Konzentration des HSA in der flüssigen Zusammensetzung im Bereich von 0,15 mg/ml bis etwa 2 mg/ml, vorzugsweise etwa 0,8 bis etwa 1,2 mg/l liegt.

12. Verfahren nach einem der Ansprüche 1 bis 11, wobei der mindestens eine von HSA verschiedene pharmazeutisch annehmbare Träger ausgewählt ist aus der Gruppe bestehend aus Trehalose, Poloxamer, Harnstoff, Argininhydrochlorid, Tromethamin, Tris-Hydrochlorid, Chloridsalzen und Phosphatsalzen oder einer beliebigen Kombination davon.

13. Verfahren nach einem der Ansprüche 1 bis 12, wobei das Verfahren die folgenden Schritte umfasst:

(a) Aufbringen von etwa 5 µl bis etwa 15 µl der flüssigen Zusammensetzung auf eine Größenausschlusschromatographiesäule, wobei das Säulenmaterial mit einem Kieselgel gekoppelte Diolreste umfasst;
(b) Durchführen einer Größenausschlusschromatographie bei einer Flussrate von etwa 0,7 bis etwa 0,9 ml/min mit einer mobilen Phase, die etwa 0,08 bis etwa 0,12 M Phosphatpuffer mit etwa 0,08 M bis etwa 0,12 M Natriumsulfat bei einem pH-Wert von etwa 6,8 bis etwa 7,0 umfasst;
(c) Detektieren der UV-Absorption des HSA-Monomers an dem Ausgang der Säule; und
(d) Berechnen der Menge an HSA-Monomer anhand der Fläche unter der Kurve (AUC) des detektierten Signals.

14. Verwendung des Verfahrens nach einem der Ansprüche 1 bis 13 bei der Qualitätskontrolle einer einwertigen In-Prozess-Arzneimittelsubstanz, einer massiven einwertigen Arzneimittelsubstanz und/oder eines finalen vierwertigen Arzneimittelprodukts.

15. Verwendung des Verfahrens nach Anspruch 14, wobei die einwertige Arzneimittelsubstanz ein Dengue-Virus umfasst, das ausgewählt ist aus TDV-1 bis TDV-4, und das vierwertige Arzneimittelprodukt jedes von TDV-1 bis TDV-4 umfasst.

16. Verwendung des Verfahrens nach einem der Ansprüche 1 bis 13 zum Überwachen der Langzeitstabilität des HSA-Monomers in virushaltigen pharmazeutischen Formulierungen.

17. Qualitätskontrollverfahren für Impfstoffe, die lebende, attenuierte Dengue-Viren enthalten, umfassend Durchführen des Verfahrens nach einem der Ansprüche 1 bis 13 und mindestens ein weiteres Verfahren, das ausgewählt ist aus der Gruppe bestehend aus Identitätstest, Immunofokus-Test, visueller Inspektion, Bestimmung der Rekonstitutionszeit oder Resuspendierbarkeit von Lyophilisaten, Sterilitätsprüfung, Prüfung auf bakterielle Endotoxine, Bestimmung der Wirtszellen-DNA, Bestimmung des pH-Wertes, kolorimetrischer Bestimmung von Wasser, Bestimmung der Osmolalität, Bestimmung des Gehalts eines oder mehrerer Hilfsstoffe(s).

**Revendications**

1. Procédé pour la détermination quantitative de monomères d'albumine sérique humaine (HSA) dans une composition liquide comprenant au moins un virus et au moins un support pharmaceutiquement acceptable autre que l'HSA, dans lequel le procédé comprend les étapes suivantes:

(a) l'application de la composition liquide sur une colonne de chromatographie d'exclusion de taille, dans lequel le matériau de colonne comprend des résidus de diol couplés à un gel de silice;

(b) l'exécution d'une chromatographie d'exclusion de taille avec une phase mobile comprenant un sel de phosphate et un sel de sulfate à une valeur de pH d'environ 6 à environ 8;

(c) la détection de l'absorption UV des monomères HSA à la sortie de la colonne ; et

(d) le calcul de la quantité de monomères HSA à partir de l'aire sous la courbe (AUC) du signal détecté.

2. Procédé selon la revendication 1, dans lequel l'au moins un virus est choisi parmi un flavivirus, de manière davantage préférée le flavivirus est un virus de la dengue.

3. Procédé selon la revendication 1 ou 2, dans lequel l'au moins un virus est un virus de la dengue atténué, de préférence le virus atténué est choisi parmi TDV-1 à TDV-4 (SEQ ID Nos: 1 à 4), et toute combinaison de ceux-ci.

4. Procédé selon l'une quelconque des revendications 1 à 3, dans lequel la composition liquide est une composition de vaccin.

5. Procédé selon l'une quelconque des revendications 1 à 4, dans lequel la composition liquide est obtenue par reconstitution d'une composition de vaccin lyophilisée.

6. Procédé selon l'une quelconque des revendications 1 à 5, dans lequel le matériau de colonne de l'étape (a) a une taille de pores d'environ 15 à 30 nm, de préférence d'environ 18 à 22 nm.

7. Procédé selon l'une quelconque des revendications 1 à 6, dans lequel le matériau de colonne comprend des résidus de dihydroxypropyle couplés au gel de silice.

8. Procédé selon l'une quelconque des revendications 1 à 7, dans lequel la phase mobile comprend environ 0,08 à environ 0,12 M de tampon phosphate avec environ 0,08 M à environ 0,12 M de sulfate de sodium à une valeur de pH d'environ 6,8 à environ 7,0.

9. Procédé selon l'une quelconque des revendications 1 à 8, dans lequel le volume d'injection de la composition liquide appliquée à l'étape (a) est d'environ 5 à 15 μl.

10. Procédé selon l'une quelconque des revendications 1 à 9, dans lequel la chromatographie d'exclusion de taille à l'étape (b) est exécutée à un débit d'environ 0,7 à environ 0,9 ml/min.

11. Procédé selon l'une quelconque des revendications 1 à 10, dans lequel la concentration de l'HSA dans la composition liquide est comprise entre 0,15 mg/ml et environ 2 mg/ml, de préférence entre environ 0,8 et environ 1,2 mg/l.

12. Procédé selon l'une quelconque des revendications 1 à 11, dans lequel l'au moins un support pharmaceutiquement acceptable autre que l'HSA est choisi dans un groupe composé du tréhalose, du poloxamère, de l'urée, du chlorhydrate d'arginine, de la trométhamine, du chlorhydrate de Tris, des sels de chlorure et des sels de phosphate ou toute combinaison de ceux-ci.

13. Procédé selon l'une quelconque des revendications 1 à 12, dans lequel le procédé comprend les étapes suivantes:

(a) l'application d'environ 5 μl à environ 15 μl de la composition liquide sur une colonne de chromatographie d'exclusion de taille, dans lequel le matériau de colonne comprend des résidus de diol couplés à un gel de silice ;

(b) l'exécution d'une chromatographie d'exclusion de taille à un débit d'environ 0,7 à environ 0,9 ml/min avec une phase mobile comprenant environ 0,08 à environ 0,12 M de tampon phosphate avec environ 0,08 M à environ 0,12 M de sulfate de sodium à une valeur de pH d'environ 6,8 à environ 7,0 ;

(c) la détection de l'absorption UV des monomères HSA à la sortie de la colonne ; et

(d) le calcul de la quantité de monomères HSA à partir de l'aire sous la courbe (AUC) du signal détecté.

14. Utilisation du procédé selon l'une quelconque des revendications 1 à 13 dans le contrôle de qualité d'une substance médicamenteuse monovalente en cours de fabrication, d'une substance médicamenteuse monovalente en vrac et/ou d'un produit médicamenteux tétravalent final.

15. Utilisation du procédé selon la revendication 14, dans lequel la substance médicamenteuse monovalente comprend un virus de la dengue choisi parmi TDV-1 à TDV-4 et le produit médicamenteux tétravalent comprend chacun des TDV-1 à TDV-4.

16. Utilisation du procédé selon l'une quelconque des revendications 1 à 13 pour surveiller la stabilité à long terme du monomère HSA dans des formulations pharmaceutiques contenant des virus.

17. Procédé de contrôle de qualité pour vaccins contenant le virus vivant atténué de la dengue comprenant l'exécution du procédé selon l'une quelconque des revendications 1 à 13 et au moins un autre procédé choisi dans un groupe composé d'un test d'identité, un test d'immunofocus, d'une inspection visuelle, de la détermination du temps de reconstitution ou de la resuspendabilité des lyophilisats, d'un test de stérilité, d'un test d'endotoxines bactériennes, de la détermination de l'ADN de la cellule hôte, de la détermination du pH, de la détermination colorimétrique de l'eau, de la détermination de l'osmolalité, de la détermination du contenu d'un ou de plusieurs excipients.

**Figure 1**

**Figure 2**

**Figure 3**

**Figure 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140186447 A

- WO 2020051328 A

**Non-patent literature cited in the description**

- **SVIRIDOV et al.** *Clinical Chemistry*, 2006, vol. 52, 389-397
- **HUANG et al.** *J. Virol*, 2003, vol. 77 (21), 11436-11447

- **HUANG et al.** *J. Virology*, 2003, vol. 77 (21), 11436-11447